# EUROPEAN PATENT APPLICATION

(11) **EP 4 213 446 A1**
(43) Date of publication of application: **19.07.2023**
(21) Application number: 21879238.0
(22) Date of filing: 26.09.2021
(51) Int. Cl.: H04L 12/02

(54) **WIFI CHIP, WIFI DEVICE AND QUEUE SCHEDULING METHOD**

(30) Priority: 14.10.2020 CN 202011101189; 23.03.2021 CN 202110308193
(71) Applicant: Huawei Technologies Co., Ltd., Shenzhen, Guangdong 518129 (CN)
(72) Inventor: GUO, Yongkang, Shenzhen, Guangdong 518129 (CN); WANG, Tongbo, Shenzhen, Guangdong 518129 (CN); XIAO, Yuren, Shenzhen, Guangdong 518129 (CN); ZHOU, Ming, Shenzhen, Guangdong 518129 (CN)
(74) Representative: Maiwald GmbH
(86) International application number: PCT/CN2021/120698
(87) International publication number: WO 2022/078192

(57) **Abstract**

This application provides a Wi-Fi chip, a Wi-Fi device, and a queue scheduling method, and relates to the technical field of data processing. In the solution of this application, one or more buffer queues may be added to existing conventional buffer queues. In addition, more priority categories may be added to four priorities: VO, VI, BE, and BK. In this way, finer control of different priority categories can be performed on packets of different service types. Therefore, for a large quantity of to-be-transmitted packets, a Wi-Fi device can schedule packets of different service types to FIFO queues with corresponding priorities in a targeted manner based on service priorities of finer categories. In the solution of this application, services having different QoS requirements contend for a channel with different priorities. This provides a specific assurance for services having higher QoS requirements and improves user experience of Wi-Fi applications.

## Description

This application claims priorities to Chinese Patent Application No. 202011101189.5, filed with the China National Intellectual Property Administration on October 14, 2020 and entitled "WI-FI SERVICE QOS ENHANCEMENT TECHNOLOGY CHIP, DEVICE, AND METHOD", and to Chinese Patent Application No. 202110308193.7, filed with the China National Intellectual Property Administration on March 23, 2021 and entitled "WI-FI CHIP, WI-FI DEVICE, AND QUEUE SCHEDULING METHOD", both of which are incorporated herein by reference in their entireties.

### TECHNICAL FIELD

This application relates to the technical field of data processing, and in particular, to a Wi-Fi chip, a Wi-Fi device, and a queue scheduling method.

### BACKGROUND

As wireless internet communication technologies and intelligent terminals rapidly develop, wireless fidelity (wireless fidelity, Wi-Fi) technologies gradually mature. Wi-Fi applications are increasingly popular in people's daily lives, and there are a growing number of Wi-Fi-based services, such as voice services, video services, and game services. In addition, users require higher quality and reliability of Wi-Fi communication.

At present, data generated by voice, streaming videos, streaming music, and interactive games needs to be transmitted at a low latency and a high throughput rate. To ensure user experience, quality of service (quality of service, QoS) may be used to manage and prioritize data generated by different applications. For example, as a wireless QoS protocol, the Wi-Fi multimedia (Wi-Fi multimedia, WAM) standard defines four queues: VO (voice, voice flow), VI (video, video flow), BE (best effort, best effort flow), and BK (background, background flow) in descending order of priority, and ensures that packets in a queue with a higher priority have a higher capability of channel preemption. As a result, quality of network communication is optimized, which ensures stable connections between these applications and network resources.

However, when a terminal device accesses the internet through Wi-Fi, packets related to an internet access service are placed in the low-priority BE queue for transmission by default. Because the BE queue has a low priority, the packets have a low capability of channel preemption, and therefore fail to meet a requirement for transmission at a low latency and a high throughput rate. This causes poor experience of the Wi-Fi-based internet access service.

### SUMMARY

This application provides a Wi-Fi chip, a Wi-Fi device, and a queue scheduling method to resolve a problem that a current queue scheduling solution of a Wi-Fi service cannot meet a requirement for low-latency transmission of some specific service packets.

To achieve the foregoing objective, the following technical solutions are used in this application.

According to a first aspect, this application provides a Wi-Fi chip. The Wi-Fi chip includes a processor that supports a Wi-Fi protocol and M first in first out (first in first out, FIFO) queues connected to the processor. The M FIFO queues include first FIFO queues and a second FIFO queue. The first FIFO queues include a VO queue, a VI queue, a BE queue, and a BK queue. The processor is configured to schedule a to-be-transmitted packet to a FIFO queue, in the M FIFO queues, corresponding to a service type of the to-be-transmitted packet. The M FIFO queues are used to buffer packets scheduled by the processor and sequentially output the buffered packets in descending order of queue priority. A priority of the second FIFO queue is higher than a priority of each of the first FIFO queues. A packet buffered in the second FIFO queue is a packet of a preset service type.

In the solution of this application, one or more buffer queues may be added to existing conventional buffer queues. In addition, more priority categories may be added to four priorities: VO, VI, BE, and BK. In this way, finer control of different priority categories can be performed on packets of different service types. Therefore, for a large quantity of to-be-transmitted packets, a Wi-Fi device can schedule packets of different service types to FIFO queues with corresponding priorities in a targeted manner based on service priorities of finer categories. In the solution of this application, services having different QoS requirements contend for a channel with different priorities. This provides a specific assurance for services having higher QoS requirements and improves user experience of Wi-Fi applications.

Optionally, the preset service type may be preset by a system or may be set by a user.

In some implementations of the first aspect, when there are a plurality of second FIFO queues, at least one of the plurality of second FIFO queues has a priority higher than the priority of each of the first FIFO queues. The priorities of the BK queue, the BE queue, the VI queue, and the VO queue in the first FIFO queues are in ascending order. It should be noted that priorities of the M FIFO queues may be flexibly set based on a user requirement.

For example, when the priority of the added buffer queue is higher than the priorities of the existing conventional buffer queues, the Wi-Fi device may add some specific service packets that are sensitive to a latency or that a user expects to be preferentially processed to the added buffer queue. Because a probability that a buffer queue with a high priority successfully contends for a channel is higher than a probability that a buffer queue with a low priority successfully contends for the channel, latency-sensitive data can be preferentially sent. This ensures that such a packet can be transmitted at a low latency.

In some implementations of the first aspect, the processor is further configured to identify the service type of the to-be-transmitted packet based on quintuple information of the to-be-transmitted packet; and determine, based on a preset correspondence, the FIFO queue corresponding to the service type of the to-be-transmitted packet. The preset correspondence is a correspondence between the service type of the to-be-transmitted packet and one of the M FIFO queues. The quintuple information includes a source media access control (media access control, MAC) address (a MAC address is also usually referred to as a physical address), a destination MAC address, a source IP address, a destination IP address, and a port number.

In some implementations of the first aspect, the Wi-Fi chip further includes a transceiver connected to the M FIFO queues. The transceiver is configured to transmit, to a target device through a Wi-Fi channel, the packets sequentially output by the M FIFO queues.

In some implementations of the first aspect, the Wi-Fi chip is disposed in an AP device, and the target device is a STA device; or the Wi-Fi chip is disposed in a first STA device, and the target device is an AP device or a second STA device.

In some implementations of the first aspect, the transceiver is further configured to transmit the quintuple information of the to-be-transmitted packet to the target device.

In some implementations of the first aspect, enhanced distributed channel access EDCA parameters corresponding to the second FIFO queue include an arbitration interframe spacing number AIFSN, a transmission opportunity limit TXOPL, an exponent form of a minimum contention window ECWₘᵢₙ, and an exponent form of a maximum contention window ECWₘₐₓ. The AIFSN is set to be less than or equal to a preset spacing number threshold; and/or the TXOPL is set to be less than or equal to a preset transmission opportunity threshold; and/or a value of ECWₘₘ is set to be less than or equal to a preset minimum window threshold; and/or a value of ECWₘₐₓ is set to be less than or equal to a preset maximum window threshold.

In some implementations of the first aspect, a Wi-Fi air interface bandwidth occupancy rate corresponding to the second FIFO queue is greater than or equal to a preset bandwidth occupancy rate threshold.

In some implementations of the first aspect, a maximum packet sending rate corresponding to the second FIFO queue is set to be less than or equal to a preset rate threshold.

In some implementations of the first aspect, a Wi-Fi air interface packet aggregation degree corresponding to the second FIFO queue is set to be less than or equal to a preset aggregation degree threshold.

According to a second aspect, this application provides a Wi-Fi device, used on a station (station, STA) side. The Wi-Fi device includes the Wi-Fi chip according to the first aspect.

The Wi-Fi device is configured to generate or invoke, in response to an input operation performed by a user on a first application loaded in the Wi-Fi device, a to-be-transmitted packet corresponding to the first application; and send the to-be-transmitted packet to a wireless access point AP device or another Wi-Fi device through the Wi-Fi chip.

According to a third aspect, this application provides a Wi-Fi device, used on a wireless access point (access point, AP) side. The Wi-Fi device includes the Wi-Fi chip according to the first aspect.

The Wi-Fi device is configured to forward, to a second station STA device through the Wi-Fi chip, a packet received from a first STA device. Alternatively, the Wi-Fi device is configured to forward, to a network server through the Wi-Fi chip, a packet received from a first station STA device; and/or forward, to the first STA device through the Wi-Fi chip, a packet received from the network server.

According to a fourth aspect, this application provides a queue scheduling method. The method includes: scheduling a to-be-transmitted packet to a FIFO queue, in M FIFO queues, corresponding to a service type of the to-be-transmitted packet; and sequentially outputting, in descending order of queue priority, packets buffered in the M FIFO queues.

The M FIFO queues include first FIFO queues and a second FIFO queue. The first FIFO queues include a VO queue, a VI queue, a BE queue, and a BK queue. A packet buffered in the second FIFO queue is a packet of a preset service type. A priority of the second FIFO queue is higher than a priority of each of the first FIFO queues.

In some implementations of the fourth aspect, when there are a plurality of second FIFO queues, at least one of the second FIFO queues has a priority higher than the priority of each of the first FIFO queues. The priorities of the BK queue, the BE queue, the VI queue, and the VO queue are in ascending order.

In some possible implementations, before the scheduling a to-be-transmitted packet to a FIFO queue, in M FIFO queues, corresponding to a service type of the to-be-transmitted packet, the method further includes: identifying the service type of the to-be-transmitted packet; and determining, based on a preset correspondence, the FIFO queue corresponding to the service type of the to-be-transmitted packet. The preset correspondence is a correspondence between the service type of the to-be-transmitted packet and one of the M FIFO queues.

In some implementations of the fourth aspect, the identifying the service type of the to-be-transmitted packet includes: obtaining quintuple information of the to-be-transmitted packet; and identifying the service type of the to-be-transmitted packet based on the quintuple information of the to-be-transmitted packet. The quintuple information includes a source MAC address, a destination MAC address, a source IP address, a destination IP address, and a port number.

In some implementations of the fourth aspect, after the sequentially outputting, in descending order of queue priority, packets buffered in the M FIFO queues, the method further includes: transmitting, to a target device through a Wi-Fi channel, the packets sequentially output by the M FIFO queues.

In some implementations of the fourth aspect, the transmitting, to a target device through a Wi-Fi channel, the packets sequentially output by the M FIFO queues includes: An AP device transmits, to a STA device through the Wi-Fi channel, the packets sequentially output by the M FIFO queues. Alternatively, a first STA device transmits, to an AP device or a second STA device through the Wi-Fi channel, the packets sequentially output by the M FIFO queues.

In some implementations of the fourth aspect, the method further includes: The AP device receives the quintuple information of the to-be-transmitted packet sent by the STA device, identifies the service type of the to-be-transmitted packet based on the quintuple information of the to-be-transmitted packet, and determines, based on the preset correspondence, the FIFO queue corresponding to the service type of the to-be-transmitted packet. The preset correspondence is the correspondence between the service type of the to-be-transmitted packet and one of the M FIFO queues.

In some implementations of the fourth aspect, enhanced distributed channel access EDCA parameters corresponding to the second FIFO queue include an arbitration interframe spacing number AIFSN, a transmission opportunity limit TXOPL, an exponent form of a minimum contention window ECWₘᵢₙ, and an exponent form of a maximum contention window ECWₘₐₓ. The AIFSN is set to be less than or equal to a preset spacing number threshold; and/or the TXOPL is set to be less than or equal to a preset transmission opportunity threshold; and/or a value of ECWₘₘ is set to be less than or equal to a preset minimum window threshold; and/or a value of ECWₘₐₓ is set to be less than or equal to a preset maximum window threshold.

In some implementations of the fourth aspect, a maximum packet sending rate corresponding to the second FIFO queue is set to be less than or equal to a preset rate threshold.

In some implementations of the fourth aspect, a Wi-Fi air interface bandwidth occupancy rate corresponding to the second FIFO queue is set to be greater than or equal to a preset bandwidth occupancy rate threshold.

In some implementations of the fourth aspect, a Wi-Fi air interface packet aggregation degree corresponding to the second FIFO queue is set to be less than or equal to a preset aggregation degree threshold.

According to a fifth aspect, this application provides a queue scheduling apparatus. The apparatus includes units configured to perform the method according to the fourth aspect. The apparatus may correspondingly perform the method according to the fourth aspect. For related descriptions of the units in the apparatus, refer to the descriptions in the fourth aspect. For brevity, details are not described herein again.

The method according to the fourth aspect may be implemented by hardware, or may be implemented by hardware executing corresponding software. The hardware or the software includes one or more modules or units corresponding to the foregoing functions, for example, a processing module or unit and a storage module or unit.

According to a sixth aspect, this application provides a Wi-Fi device. The Wi-Fi device includes the Wi-Fi chip according to the first aspect. The Wi-Fi chip is coupled to a memory. The memory is configured to store a computer program or instructions. The Wi-Fi chip is configured to execute the computer program or the instructions stored in the memory, so that the method according to the fourth aspect is performed.

For example, the Wi-Fi chip is configured to execute the computer program or the instructions stored in the memory, to enable the Wi-Fi device to perform the method according to the fourth aspect.

The Wi-Fi device may be an AP device or a STA device.

In this solution, when packets are transmitted between an AP device and a STA device, packets of different services may be scheduled to FIFO queues with different priorities based on features and latency requirements of different services, and a packet of specific service data (for example, data that requires a low latency) may be scheduled to the added FIFO queue for preferential transmission, to reduce an air-interface transmission latency of the packet.

According to a seventh aspect, this application provides a computer-readable storage medium. The computer-readable storage medium stores a computer program (which may also be referred to as instructions or code) used to implement the method according to the fourth aspect.

For example, when the computer program is executed by a computer, the computer is enabled to perform the method according to the fourth aspect.

According to an eighth aspect, this application provides a computer program product. The computer program product includes a computer program (which may also be referred to as instructions or code). When the computer program is executed by a computer, the computer is enabled to implement the method according to the fourth aspect.

It may be understood that, for beneficial effects of the second aspect to the eighth aspect, reference may be made to related descriptions in the first aspect. Details are not described herein again.

### BRIEF DESCRIPTION OF DRAWINGS

FIG. 1 is a diagram of a system architecture of multi-device interconnection based on a wireless local area network;
FIG. 2 is a flowchart of transmitting a single packet over an air interface when a random backoff mechanism is used;
FIG. 3 is a schematic diagram of exponential increase in a packet latency during a plurality of air-interface retransmissions;
FIG. 4 shows correspondences between Wi-Fi hardware priorities and Ethernet packet priorities;
FIG. 5 is a schematic diagram of different service processing rates corresponding to different buffer queues;
FIG. 6 is a schematic diagram of queue allocation of hardware of a Wi-Fi device in the related art;
FIG. 7 is a schematic diagram of transmitting service data through queues of hardware of a Wi-Fi device in the related art;
FIG. 8 is a first schematic diagram of a hardware structure of a Wi-Fi chip according to an embodiment of this application;
FIG. 9 is a schematic diagram of transmitting service data through queues of hardware of a Wi-Fi device according to an embodiment of this application;
FIG. 10 is a second schematic diagram of a hardware structure of a Wi-Fi chip according to an embodiment of this application;
FIG. 11 is an architectural diagram of implementing multi-device interaction through a Wi-Fi chip according to an embodiment of this application;
FIG. 12 is a schematic flowchart of a queue scheduling method according to an embodiment of this application;
FIG. 13 is a schematic diagram of a structure of a queue scheduling apparatus according to an embodiment of this application; and
FIG. 14 is a schematic diagram of a structure of a terminal device according to an embodiment of this application.

### DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. Apparently, the described embodiments are merely some rather than all of the embodiments of this application. All other embodiments obtained by a person of ordinary skill in the art based on embodiments of this application without creative efforts shall fall within the protection scope of this application.

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this specification, the terms "first", "second", and the like are intended to distinguish between different objects, but do not indicate a particular order of the objects. For example, a first type, a second type, and the like are intended to distinguish between different types, but do not indicate a particular order of the types.

In embodiments of this application, "for example", "example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of "for example", "example", or the like is intended to present a related concept in a specific manner.

In the descriptions of embodiments of this application, unless otherwise specified, "a plurality of" means two or more. For example, a plurality of processing units are two or more processing units, and a plurality of elements are two or more elements.

A wireless local area network (wireless local area network, WLAN) mainly includes a STA and an AP. The STA is usually a client in the WLAN, and may be a computer installed with a wireless network adapter or a smartphone with a built-in Wi-Fi module. The STA may be mobile or fixed, and is a most essential unit of the WLAN. In a wireless network, the AP functions as a hub of a wired network and connects wireless clients. Logically, the AP is a central point of the wireless network. All wireless signals in the wireless network need to be exchanged through the AP.

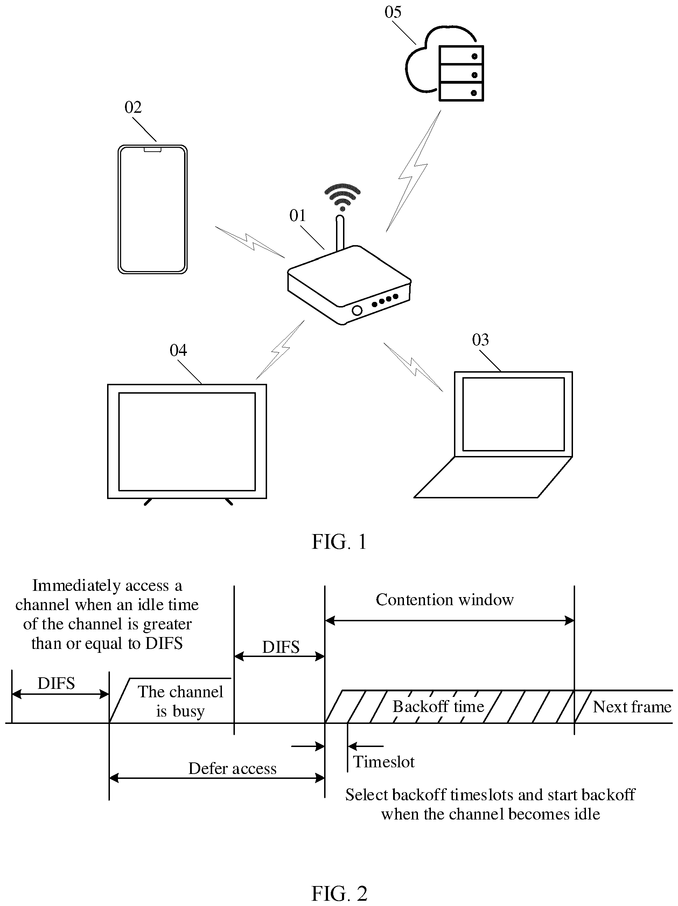

FIG. 1 is a schematic diagram of a WLAN-based Wi-Fi application scenario according to an embodiment of this application. The Wi-Fi application scenario mainly includes an AP device that provides Wi-Fi services and STA devices that support a Wi-Fi protocol. As shown in FIG. 1, the system architecture includes an AP device 01 and at least one STA device. The at least one STA device is connected to the AP device 01 based on the Wi-Fi protocol. For example, the at least one STA device may be a mobile phone 02, a notebook computer 03, and/or a television 04 in FIG. 1. Certainly, the at least one STA device may alternatively be another possible terminal device. This may be specifically determined based on an actual use requirement and is not limited in this embodiment of this application.

The at least one STA device may access a same Wi-Fi network through the AP device and implement various services. For example, the mobile phone 02 may obtain data from a network server 05 or upload data to the network server 05 through the Wi-Fi network to implement an internet access service. Alternatively, the mobile phone 02 may establish a connection to the notebook computer 03 through the Wi-Fi network, and data may be transmitted to each other through a channel of the AP device 01 to implement a data transmission service. Alternatively, the mobile phone 02 may transmit projection data to the television 04 through a channel of the AP device 01. In this way, an image displayed on the mobile phone can be projected and displayed on a display of the television, to implement a projection service. Certainly, the at least one STA device may be alternatively interconnected through a Wi-Fi local area network to implement another service. This may be specifically determined based on an actual use requirement and is not limited in this embodiment of this application.

It should be noted that the STA device first needs to access a Wi-Fi channel (that is, occupy the Wi-Fi channel), and then transmits a packet through the Wi-Fi channel. In addition to that the STA device occupies the Wi-Fi channel when the STA device sends a packet to the AP device, the AP device occupies the Wi-Fi channel when forwarding the received packet to another device. For ease of description, devices that access a Wi-Fi channel and transmit a packet through the Wi-Fi channel are collectively referred to as Wi-Fi devices. When a plurality of Wi-Fi devices simultaneously access a Wi-Fi channel to transmit packets, channel contention exists.

For ease of understanding embodiments of this application, the following describes some terms in embodiments of this application, to help a person skilled in the art have a better understanding.
(1) Backoff mechanism: In the IEEE 802.11 protocol, a DCF (distributed coordination function, distributed coordination function) specifies that an AP device and a STA device use a CSMA/CA (carrier sense multiple access with collision avoidance, carrier sense multiple access with collision avoidance) access manner. That is, a random backoff mechanism is used to resolve channel contention and provide a contention-based wireless access service.
   FIG. 2 is a flowchart of transmitting a single packet over an air interface when a random backoff mechanism is used. As shown in FIG. 2, when a node (for example, an AP device or a STA device) needs to occupy or access a channel to send data, the node listens to the channel, for example, invokes a carrier sense mechanism to determine a busy/idle status of the channel. If the channel is busy, access is deferred until an idle time of the channel is greater than or equal to a specified idle waiting time (indicated by DIFS in the figure). To avoid an access collision, the node needs to wait a random backoff time (backoff time) before sending data. The backoff time is a random integer with a backoff timeslot as a unit. The node selects a random number of backoff timeslots within a contention window range to perform backoff. In other words, the node selects backoff timeslots and starts backoff when the channel becomes idle. A device that first finishes backoff successfully contends for the channel.
(2) A contention window (contention window, CW) falls between a minimum contention window (denoted as CWmin) and a maximum contention window (denoted as CWmax), and is a key parameter for controlling congestion. At present, a large quantity of Wi-Fi devices share spectrum resources, and a collision detection mechanism is used during transmission over an air interface. When different Wi-Fi devices simultaneously send packets and a collision is caused, a node selects backoff timeslots and waits. When a plurality of air-interface retransmissions occur, a packet transmission latency rapidly increases.

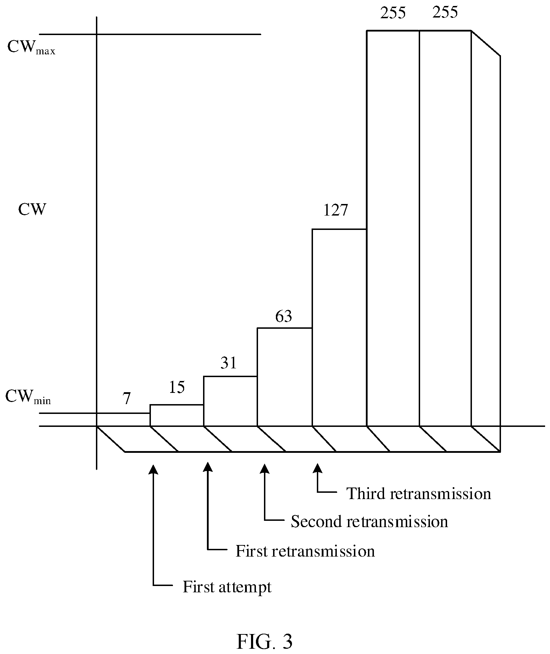

   FIG. 3 is a schematic diagram of exponential increase in a packet latency during a plurality of air-interface retransmissions. As shown in FIG. 3, when a plurality of collisions occur, duration of a backoff window exponentially increases, resulting in a transmission latency at a Wi-Fi air interface and problems such as a network latency and packet blocking.
(3) QoS: QoS is a network security mechanism that is used to resolve problems such as a network latency and packet blocking. IEEE 802.11e is a media access control (media access control, MAC) layer enhancement protocol for WLANs. The protocol adds QoS features to IEEE 802.11-based WLAN systems. To ensure interoperability between QoS-supported devices of different WLAN vendors, the Wi-Fi Alliance defines the WMM standard.
(4) WMM standard: WMM is a wireless QoS protocol that is used to ensure that high-priority packets are preferentially sent, to ensure better quality of voice, video, and other applications on wireless networks. The WAM standard enables a WLAN to provide QoS services.
(5) EDCA (enhanced distributed channel access, enhanced distributed channel access): a channel contention mechanism defined by WMM. This mechanism enables high-priority packets to be preferentially sent and occupy more bandwidth.
(6) AC (access category, access category): The WMM standard defines four queues in descending order of priority: AC-VO (voice flow), AC-VI (video flow), AC-BE (best effort flow), and AC-BK (background flow), and ensures that packets in a queue with a higher priority have a higher capability of channel preemption.
   In other words, the WAM standard classifies packets in a basic service set (basic service set, BSS) into four ACs. An AC with a high priority has a higher probability of occupying a channel than an AC with a low priority. Therefore, different ACs can obtain services of different levels.
   The WMM standard defines a set of channel contention EDCA parameters for each AC. The EDCA parameters are described as follows.
      (a) AIFSN (arbitration interframe spacing number, arbitration interframe spacing number): In the IEEE 802.11 protocol, an idle waiting time (DIFS) is fixed. However, WMM allows different idle waiting times AIFS to be configured for different ACs. A larger AIFSN indicates a longer idle waiting time.
      (b) ECWₘₘ (exponent form of CWmin, exponent form of a minimum contention window) and ECWₘₐₓ (exponent form of CWmax, exponent form of a maximum contention window) determine an average backoff time. Smaller values of ECWₘₘ and ECWₘₐₓ indicate a shorter average backoff time.
      (c) A TXOPL (transmission opportunity limit, transmission opportunity limit) is maximum duration for which a node can occupy a channel at a time after a node successfully contends for the channel. A larger value of the TXOPL indicates longer duration for which the node can occupy the channel at a time. If the TXOPL is 0, only one packet can be sent each time a channel is occupied.
(7) Frame aggregation technology: A collision that occurs during channel contention and a backoff mechanism introduced to resolve the collision greatly reduce throughput of a system. To resolve these two problems at a MAC layer, the frame aggregation technology is used. In the frame aggregation technology, an aggregate MAC service data unit (MAC service data unit, MSDU) is referred to as A-MSDU for short. This technology aims to aggregate a plurality of MSDU subframes and encapsulate them into one 802.11 packet for transmission, to reduce packet header overheads required to send each 802.11 packet, reduce a quantity of response frames, and improve packet transmission efficiency.

As information technologies and intelligent terminals rapidly develop, Wi-Fi applications are increasingly popular in people's daily lives, and there are a growing number of Wi-Fi-based services, such as voice services, video services, and game services. At present, data generated by voice, streaming videos, streaming music, and interactive games needs to be transmitted at a low latency and a high throughput rate. To ensure user experience, QoS may be used to manage and prioritize data generated by different applications.

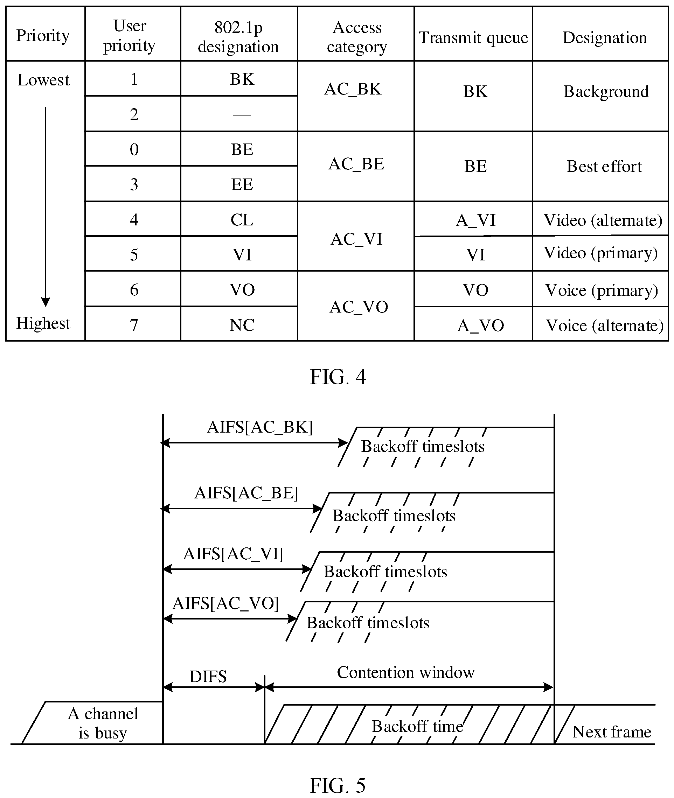

FIG. 4 shows correspondences between Wi-Fi hardware priorities and Ethernet packet priorities in 802.1p. As shown in FIG. 4, IEEE 802.11e (WLAN QoS) classifies data into four access categories. A first access category is AC_VO. This access category supports voice services and processes voice flows. User priorities are 6 and 7, which are highest priorities. Corresponding transmit queues are VO and A_VO queues. A second access category is AC_VI. This access category supports video services and processes video flows. User priorities are 4 and 5, which are second priorities. Corresponding transmit queues are A_VI and VI queues. A third access category is AC_BE. This access category supports data transmission services and processes internet access services. User priorities are 0 and 3, which are third priorities. A corresponding transmit queue is a BE queue. A fourth access category is AC_BK. This access category supports background services. User priorities are 1 and 2, which are lowest priorities. A corresponding transmit queue is a BK queue.

Each category of priority corresponds to a buffer queue in a WLAN driver. Different buffer queues correspond to different service processing priorities. With reference to FIG. 5, idle waiting times AIFS[AC_VO], AIFS[AC_VI], AIFS[AC_BE], and AIFS[AC _BK] and air-interface transmission latencies corresponding to AC_VO, AC_VI, AC_BE, and AC_BK sequentially increase.

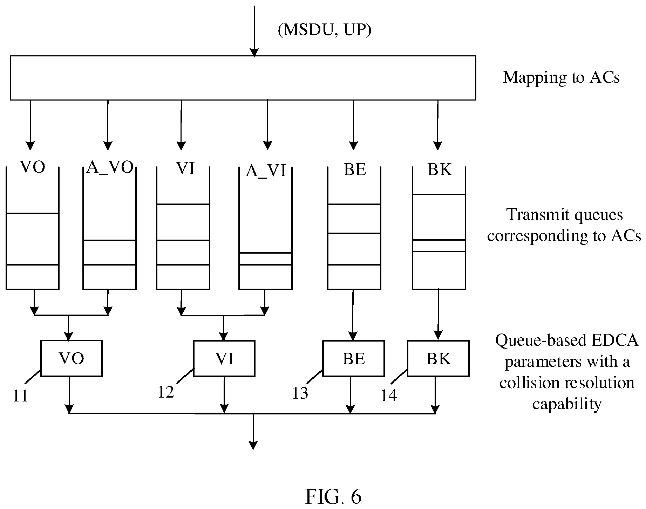

FIG. 6 is a schematic diagram of queue allocation of hardware of a Wi-Fi device in the related art. As shown in FIG. 6, the hardware of the Wi-Fi device includes a VO queue 11, a VI queue 12, a BE queue 13, and a BK queue 14. These queues may be FIFO buffer queues. Priorities of the VO queue 11, the VI queue 12, the BE queue 13, and the BK queue 14 are in descending order. As shown in FIG. 6, an MSDU maps a packet to a corresponding AC access category based on a user priority (user priority, UP) corresponding to the packet. Transmit queues corresponding to AC access categories are VO (including primary VO and alternate A_VO), VI (including primary VI and alternate A VI), BE, and BK. Then, the packet is added to a corresponding transmit queue (for example, the VO queue 11, VI queue 12, BE queue 13, or BK queue 14). Each queue is configured with corresponding EDCA parameters to resolve an internal collision. In addition, a higher queue priority indicates a higher capability of channel preemption. As a result, quality of network communication is optimized.

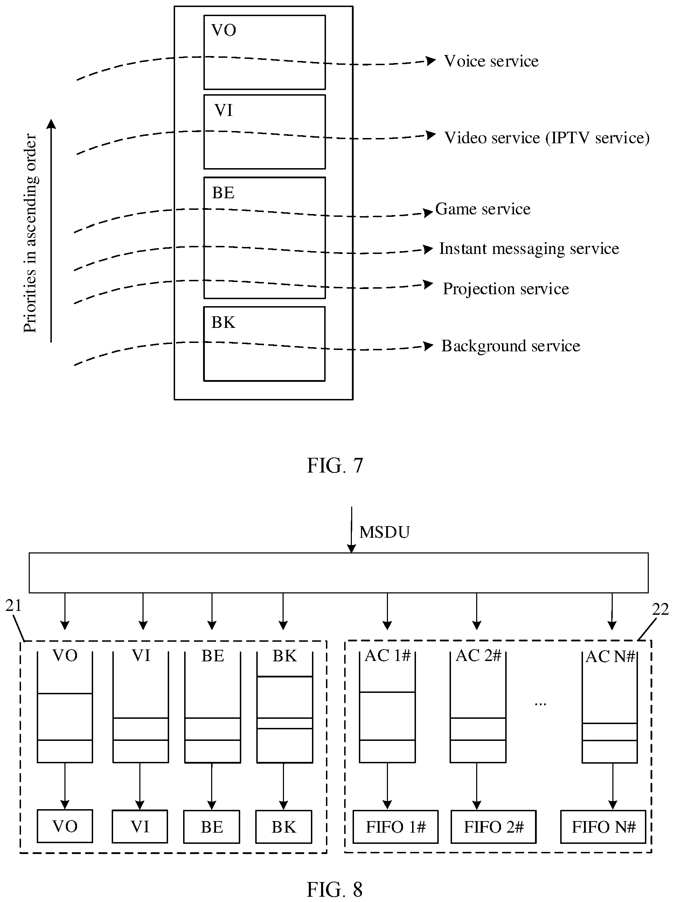

Different service data is transmitted in daily life. When processing data transmission of different services, an AP device or a STA device usually buffers service data in a default priority queue. As shown in FIG. 7, for a voice service, voice data is usually scheduled to a VO queue with a highest priority by default. For a video service (an IPTV service), video data is usually scheduled to a VI queue with a medium priority by default. For an internet access service such as a game service, an instant messaging service, or a projection service, internet access data is usually scheduled to a BE queue with a low priority by default. For a background service, background data is usually scheduled to a BK queue with a lowest priority by default.

However, different service data has different transmission requirements. At present, some latency-sensitive data, for example, network data such as a game packet, an instant messaging packet, and a projection packet, or data that a user expects to be preferentially processed is buffered in the BE queue with the low priority. As a result, this type of service may have a high latency. When a transmission latency occurs, data received by a receiver is discontinuous, resulting in poor user experience.

In view of this, this application provides a Wi-Fi chip, a Wi-Fi device, and a queue scheduling method. One or more buffer queues may be added to existing conventional buffer queues. In addition, more priority categories may be added to four priorities: VO, VI, BE, and BK. In this way, finer control of different priority categories can be performed on packets of different service types. Therefore, for a large quantity of to-be-transmitted packets, a Wi-Fi device can schedule packets of different service types to FIFO queues with corresponding priorities in a targeted manner based on service priorities of finer categories. For example, it is assumed that a priority of the added buffer queue is set to be higher than priorities of the existing conventional buffer queues. In this case, some latency-sensitive data or data that a user expects to be preferentially processed may be added to the added buffer queue and is preferentially sent to ensure that the data is transmitted at a low latency. In the solution of this application, services having different QoS requirements contend for a channel with different priorities. This provides a specific assurance for services having higher QoS requirements and improves user experience of Wi-Fi applications.

### Embodiment 1

In Embodiment 1, this application provides a Wi-Fi chip. The Wi-Fi chip includes a processor and a plurality of FIFO queues. The processor may be configured to schedule or control a to-be-transmitted packet, for example, schedule the packet to one of the plurality of FIFO queues and control packets in the plurality of FIFO queues to be sequentially output in order of queue priority.

The plurality of FIFO queues may include four first FIFO queues and N second FIFO queues. The four first FIFO queues include a voice VO flow queue, a video VI flow queue, a best effort BE flow queue, and a background BK flow queue. The N second FIFO queues are added private FIFO queues, and are used to buffer data that is sensitive to a transmission latency or packets that a user expects to be preferentially processed. Service types of data to be stored in the N second FIFO queues may be preset by a system or set by the user based on actual use requirements.

FIG. 8 is a schematic diagram of a hardware structure of a Wi-Fi chip according to an embodiment of this application. As shown in FIG. 8, in this embodiment of this application, N private hardware queues 22, namely, a FIFO 1# queue (corresponding to a private access category AC 1#), a FIFO 2# queue (corresponding to a private AC 2#), ..., and a FIFO N# queue (corresponding to a private AC N#), are added to four standard queues 21 specified in 802.11, namely, a VO queue, a VI queue, a BE queue, and a BK queue. It should be noted that the VO queue includes primary VO and alternate A_VO, and the VI queue includes primary VI and alternate A_VI. For brevity and clarity of the figure, FIG. 8 does not show the alternate A_VO and the alternate A_VI.

In other words, in this embodiment of this application, in addition to the standard VO, VI, BE, and BK queues, the Wi-Fi chip further supports additional FIFO queues. The additional FIFO queues may be used in specific applications to transmit data of specific services independent of conventional service data buffering. For example, the private FIFO queues may be used to buffer latency-sensitive data, for example, internet access data such as a game packet, an instant messaging packet, and a projection packet, or packets that a user expects to be preferentially processed.

Optionally, in this embodiment of this application, all the FIFO queues (including the four standard FIFO queues and the N added private FIFO queues) may be prioritized based on an actual use requirement. Packets in a queue with a higher priority have a higher capability of channel preemption.

For example, priorities of the FIFO queues in descending order may be set as follows: FIFO 1# queue > FIFO 2# queue > ... > FIFO N# queue > VO queue > VI queue > BE queue > BK queue. In actual implementation, a packet that needs to be processed with a highest priority may be scheduled to the FIFO 1# queue, and a packet that needs to be processed with a lowest priority may be scheduled to the BK queue, to ensure that data with a high priority can be transmitted at a low latency.

It should be noted that the foregoing order of the priorities of the FIFO queues is an example, and this embodiment of this application is not limited thereto. For example, the priorities of the FIFO queues in descending order may be set as follows: FIFO 1# queue > VO queue > FIFO 2# queue > ... > FIFO N# queue > VI queue > BE queue > BK queue. Certainly, the priorities of the FIFO queues may alternatively be in another possible order, which may be specifically determined based on an actual use requirement. This is not limited in this embodiment of this application.

For example, in this embodiment of this application, a private hardware FIFO 1# queue may be added to the four standard queues, and a priority of the private hardware FIFO 1# queue is higher than each of priorities of the four standard queues. Therefore, a packet of specific data (for example, data that requires a low latency) may be scheduled to the added FIFO 1# queue for preferential output, to reduce a transmission latency of the packet. For example, it is assumed that a game service is set to a specific service and requires low-latency transmission. In this case, it may be specified that data of the game service is added to the private FIFO 1# queue with the highest priority, to ensure that such service data can be transmitted at a low latency.

For another example, it is assumed that in this embodiment of this application, four private FIFO queues, namely, a FIFO 1# queue, a FIFO 2# queue, a FIFO 3# queue, and a FIFO 4# queue, are added to the four standard FIFO queues, namely, the VO queue, VI queue, BE queue, and BK queue. The priorities of the FIFO queues in descending order may be set as follows: FIFO 1# queue > FIFO 2# queue > FIFO 3# queue > FIFO 4# queue > VO queue > VI queue > BE queue > BK queue. Because packets of different service types have different transmission requirements, some specific services, for example, latency-sensitive services such as a game service, an instant messaging service, a projection service, and an IPTV service, may be set to correspond to different priority queues. It is assumed that required data transmission rates of the IPTV service, the projection service, the instant messaging service, and the game service are in ascending order. In this case, the IPTV service, the projection service, the instant messaging service, and the game service may correspond to the FIFO 4# queue, the FIFO 3# queue, the FIFO 2# queue, and the FIFO 1# queue respectively.

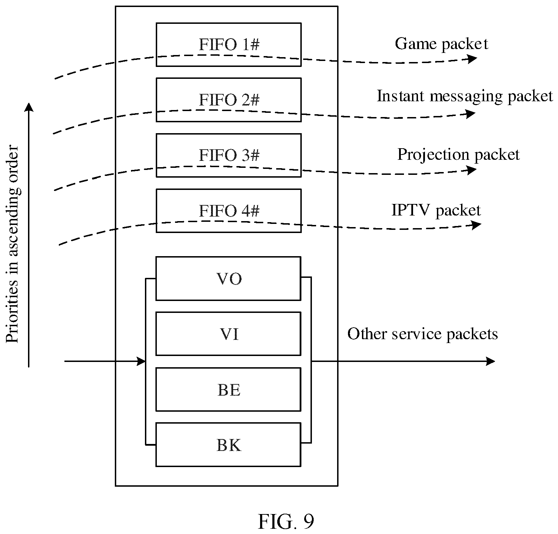

With reference to FIG. 9, when obtaining various types of packets, the Wi-Fi chip may schedule packets corresponding to the specific services to the added private FIFO queues, for example, schedule a game packet corresponding to the game service to the FIFO 1# queue for buffering, schedule an instant messaging packet corresponding to the instant messaging service to the FIFO 2# queue for buffering, schedule a projection packet corresponding to the projection service to the FIFO 3# queue for buffering, and schedule an IPTV packet corresponding to the IPTV service to the FIFO 4# queue for buffering. In addition, packets of services other than the specific services, such as a voice service, a video service, an internet access service, and a background service, are correspondingly scheduled to the standard queues in a conventional manner. A probability that a FIFO queue with a high priority successfully contends for a channel is higher than a probability that a FIFO queue with a low priority successfully contends for the channel. Therefore, packets (packets that need to be preferentially processed or latency-sensitive packets) of some specific services are scheduled to the added private FIFO queue with the high priority for preferential sending. In the solution of this application, services having different QoS requirements contend for a channel with different priorities. This provides a specific assurance for services having higher QoS requirements and improves user experience of Wi-Fi applications.

Optionally, in some embodiments, different EDCA parameters may be set on the basis of the added private hardware FIFO queue in this embodiment of this application, to reduce duration of a backoff window and an air-interface waiting latency of a packet. As described above, the EDCA parameters include an AIFSN, ECWₘᵢₙ, ECWₘₐₓ, and a TXOPL. The following describes how to set these parameters.

As described above, a smaller AIFSN indicates a shorter idle waiting time. Therefore, a transmission latency can be reduced by setting a value range of the AIFSN. For example, on the basis of the added private hardware FIFO queue, the AIFSN may be set to a relatively small value within an appropriate range based on an actual use requirement of a to-be-processed service, to reduce an idle waiting time and the air-interface waiting latency of the packet.

In addition, as described above, ECWₘₘ and ECWₘₐₓ determine an average backoff time. Smaller values of ECWₘₘ and ECWₘₐₓ indicate a shorter average backoff time. Therefore, a packet transmission latency can be reduced by setting value ranges of ECWₘₘ and ECWₘₐₓ. For example, on the basis of the added private hardware FIFO queue, ECWₘₘ and ECWₘₐₓ each may be set to a relatively small value within an appropriate range based on an actual use requirement of a to-be-processed service, to reduce the duration of the backoff window and the air-interface waiting latency of the packet.

Further, as described above, a smaller value of the TXOPL indicates shorter duration for which a Wi-Fi device can occupy a channel at a time, and a shorter air-interface waiting latency of a packet of another Wi-Fi device. Therefore, the packet transmission latency can be reduced to some extent by setting a value range of the TXOPL. For example, on the basis of the added private hardware FIFO queue, the TXOPL may be set to a relatively small value within an appropriate range based on an actual use requirement of a to-be-processed service, to reduce the air-interface waiting latency of the packet.

For example, the private FIFO queue is set to buffer a game service. The EDCA parameters for the private FIFO queue are set as follows: ECWₘₘ = 2, ECWₘₐₓ = 3, AIFSN = 2, and TXOPL = 0. It should be noted that a manner of setting EDCA parameters for all the FIFO queues may be specifically determined based on an actual use requirement. This is not limited in this embodiment of this application.

Optionally, in some embodiments, a maximum air interface rate may be set on the basis of the added private hardware FIFO queue in this embodiment of this application. In view of a latency requirement of a packet, a maximum rate at which the packet is sent from the FIFO queue is reduced, to reduce a required signal-to-noise ratio (signal noise ratio, SNR) of the packet. Because the required SNR of the packet is reduced, a probability that the packet is retransmitted due to interference is reduced in a same interference scenario. In other words, a quantity of packet retransmissions is reduced, so that the packet transmission latency can be reduced. Therefore, on the basis of the added private hardware FIFO queue, the maximum rate at which the packet is sent from the FIFO queue may be reduced within an appropriate range based on the actual use requirement of the to-be-processed service, to reduce the air-interface waiting latency of the packet.

For example, the private FIFO queue is set to buffer the game service. An air interface rate for the private FIFO queue may be set to be less than or equal to V megabits per second (megabits per second, Mbps). In other words, a maximum air interface rate is V For example, V is 48 Mbps. It should be noted that a manner of setting maximum air interface rates for all the FIFO queues may be specifically determined based on an actual use requirement. This is not limited in this embodiment of this application.

Optionally, in some embodiments, percentages of bandwidths, of a Wi-Fi air interface, occupied by the private queues and the standard queues or percentages of traffic of the private queues and the standard queues may be set based on the actual use requirement of the to-be-processed service on the basis of the hardware FIFO in this embodiment of this application. For example, Wi-Fi air interface occupancy rates may be assigned to all the FIFO queues (including the four standard FIFO queues and the N added private FIFO queues) in an air time fairness (air time fairness, ATF) scheduling manner, to ensure a high priority and bandwidth of the private queues. This reduces the packet transmission latency.

For example, the private FIFO queue is set to buffer the game service. The Wi-Fi air interface occupancy rate of the private FIFO queue may be set to 20%. A sum of the Wi-Fi air interface occupancy rates of the VO queue, the VI queue, the BE queue, and the BK queue is 80%. It should be noted that a manner of assigning the Wi-Fi air interface occupancy rates to all the FIFO queues may be specifically determined based on an actual use requirement. This is not limited in this embodiment of this application.

Optionally, in some embodiments, an air interface packet aggregation degree may be reduced on the basis of the hardware FIFO in this embodiment of this application. An aggregation degree of a high-priority packet may be reduced, to reduce a waiting latency of an air interface packet aggregated frame. The high-priority packet uses a low aggregation degree, so that a transmission latency of the packet can be reduced.

For example, the private FIFO queue is set to buffer the game service. An A-MPDU aggregation degree for the private FIFO queue may be set to be less than or equal to 16. It should be noted that a manner of setting packet aggregation degrees for all the FIFO queues may be specifically determined based on an actual use requirement. This is not limited in this embodiment of this application.

In this embodiment of this application, the packet transmission latency is reduced through measures such as (1) setting different EDCA parameters, (2) setting percentages of bandwidths, of the Wi-Fi air interface, occupied by the private queues and the standard queues or percentages of traffic of the private queues and the standard queues, (3) reducing the maximum air interface rate (that is, limiting a quantity of air interface retransmissions), and (4) reducing the packet aggregation degree. It can be learned that in comparison with the related art in which only the EDCA parameters are factored into the transmission latency, other factors (for example, (2), (3), and (4)) that affect the latency are considered in addition to the EDCA parameters in this embodiment of this application, to reduce the transmission latency of the high-priority packet. Certainly, in this embodiment of this application, another measure to reduce an air interface latency is not excluded. This may be specifically determined based on an actual use requirement, and is not limited in this embodiment of this application.

In comparison with the related art in which packets (packets that need to be preferentially processed or latency-sensitive packets) of some specific services are transmitted at a high latency due to inappropriate buffer queue planning, in this embodiment of this application, buffer queues are added, and priorities of buffer queues are adjustable. In addition, to-be-transmitted packets are finely classified, and a packet is added to a corresponding buffer queue based on a latency requirement of the packet. Because a probability that a buffer queue with a high priority successfully contends for a channel is higher than a probability that a buffer queue with a low priority successfully contends for the channel, latency-sensitive data can be preferentially sent. In the solution of this application, services having different QoS requirements contend for a channel with different priorities. This provides a specific assurance for services having high QoS requirements and improves user experience of Wi-Fi applications.

It should be noted that packets of different service types correspond to different user priorities, which is usually planned by an operator. In addition, a packet network access device (such as an IPTV set-top box) is usually marked with a corresponding user priority. For example, a user priority corresponding to a packet of a voice over IP (voice over Internet protocol, VoIP) service is 7, a user priority corresponding to a packet of an internet protocol television (Internet protocol television, IPTV) service is 5, and a user priority corresponding to a packet of an internet access service is 0.

In this embodiment of this application, priority queue planning of the operator is not modified. An improvement is that one or more private FIFO queues are added to the existing four standard queues. When packets are transmitted between an AP device and a STA device, packets of different services may be scheduled to FIFO queues with different priorities based on features and latency requirements of different services, and a packet of specific data (for example, data that requires a low latency) may be scheduled to the added FIFO queue for preferential transmission, to reduce a transmission latency of the packet.

Optionally, in this embodiment of this application, when the Wi-Fi chip obtains the to-be-transmitted packet, the processor of the Wi-Fi chip may be configured to identify a service type of the packet. Further, the processor may determine a corresponding FIFO queue based on the service type of the packet and add the packet to the corresponding FIFO queue.

For example, in this embodiment of this application, a packet type, namely, a service type of a first packet, may be identified based on quintuple information of the first packet. The quintuple information includes a source MAC address, a destination MAC address, a source IP address, a destination IP address, and a port number. Alternatively, the quintuple information includes a source IP address, a source port, a transport layer protocol, a destination IP address, and a destination port. For example, a process of identifying the service type of the packet is as follows: After the first packet is obtained, a quintuple of the packet is extracted, and an address routing table is searched for whether an entry including the quintuple exists. If the entry exists, the service type of the packet is a service type identified by the entry.

For another example, the process of identifying the service type of the packet is as follows: After the first packet is obtained, a network address and a port pair of the packet are extracted. An association table is searched for an entry including the network address and the port pair. The association table stores entries of correspondences of network addresses and ports to service types. If the entry including the network address and the port pair is found in the association table, it is determined that the service type of the packet is a service type identified by the entry.

It should be noted that the foregoing examples show possible implementations of identifying the service type of the packet. In actual implementation, this embodiment of this application is not limited thereto, and the service type of the packet may be alternatively identified in another possible manner. This may be specifically determined based on an actual use requirement and is not limited in this embodiment of this application.

It should be noted that the foregoing uses an example in which the packet type is identified based on the quintuple information of the packet for description. It may be understood that in actual implementation, this embodiment of this application is not limited thereto, and the packet type may be alternatively identified based on triplet information of the packet. The triplet information includes a transport layer protocol, a source address, and a source port number. This may be specifically determined based on an actual use requirement and is not limited in this embodiment of this application.

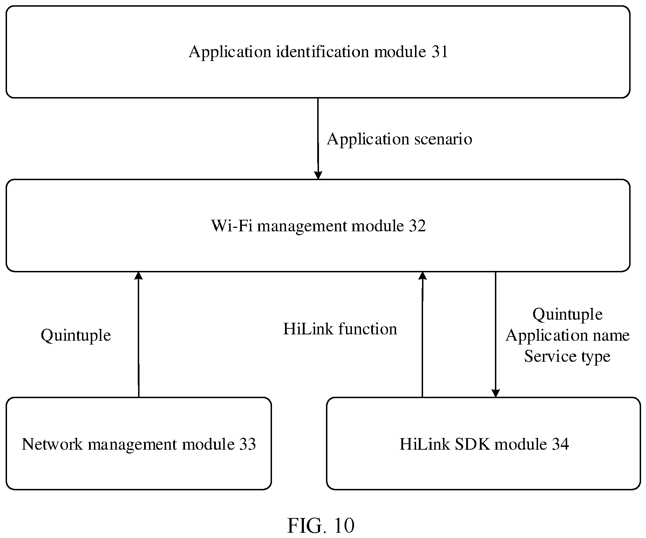

In actual implementation, as shown in FIG. 10, the processor of the Wi-Fi chip may include an application identification module 31, a Wi-Fi management module 32, a network management module 33, and a HiLink SDK module 34. When an application sends a packet transmission request (a packet that the application requests to transmit is referred to as a first packet below), the application identification module 31 may identify the application based on an application scenario, determine a name of the application, determine a service feature of a packet that needs to be preferentially processed, and send the feature of the packet to the Wi-Fi management module 32; and the network management module 33 may obtain quintuple information of the first packet and sends an identification result to the Wi-Fi management module 32. Correspondingly, the Wi-Fi management module 32 compares a feature of the currently transmitted packet with the preset feature of the packet that needs to be preferentially processed, identifies whether the currently transmitted packet needs to be preferentially processed, and if the packet needs to be preferentially processed, schedules the packet to a corresponding FIFO queue for preferential transmission. In addition, the Wi-Fi management module 33 may send the feature of the packet that needs to be preferentially processed to the HiLink SDK module 34. The HiLink SDK module 34 is a program module running on an SoC and is configured to implement network connection of a device, and interconnection and interworking between the device and a smart home cloud and between the device and a smart home application. The HiLink SDK module 34 may send the quintuple information of the packet that needs to be preferentially processed to a connected Wi-Fi device, so that the connected Wi-Fi device identifies a priority of the packet and performs corresponding priority control.

In this embodiment of this application, in a process of exchanging and transmitting packets between an AP device and a STA device, two sides of interacted devices may separately accelerate packet transmission. In a downlink direction of packet transmission from the AP device to the STA device, packets are placed in FIFO queues with different priorities on the AP side for scheduling processing, so that packet transmission in the downlink direction can be accelerated. In an uplink direction of packet transmission from the STA device to the AP device, packets are placed in FIFO queues with different priorities on the STA side for scheduling processing, so that packet transmission in the uplink direction can be accelerated.

In actual implementation, when sending a packet to the AP device, the STA device may transmit quintuple information of the packet to the AP device through a HiLink module (or another private processing module), so that the AP device identifies a priority of the packet and performs corresponding priority control.

For example, it is assumed that the following is preset on a mobile phone (namely, the STA device): A target game is accelerated (for example, an application name of the target game is added to a corresponding acceleration list). Then, when a user triggers startup of the target game on the mobile phone, the mobile phone identifies packet quintuple information of the target game. The STA device may determine, based on the packet quintuple information, which packets in packets to be sent by the STA device to the AP device are packets of the target game, and place the packets of the target game in a corresponding high-priority FIFO queue. In addition, the STA device may transmit the packet quintuple information of the target game to the AP device through the HiLink module to notify the AP device that the target game needs to be accelerated. Further, when receiving a packet sent by a network side and sending the packet to the STA device, the AP device identifies whether a feature of the packet is consistent with the packet quintuple information of the target game. If the feature is consistent with the packet quintuple information, the packet is a packet of the target game. In this case, the packet is placed in a corresponding high-priority FIFO queue to accelerate transmission of the packet in the direction from the AP device to the STA device. This can ensure that service packets having a high QoS requirement can be transmitted with a high priority on two sides of interacted devices.

It should be noted that in this embodiment of this application, the one or more buffer queues added to the existing conventional buffer queues may be hardware FIFO queues or software FIFO queues. This may be specifically determined based on an actual use requirement and is not limited in this embodiment of this application.

### Embodiment 2

In Embodiment 2, this application provides an AP device. The AP device includes the Wi-Fi chip in Embodiment 1.

Optionally, the AP device may establish a wireless connection to one or more terminal devices (namely, STA devices) through a Wi-Fi protocol, that is, establish a Wi-Fi transmission channel, so that the AP device and the one or more STA devices can transmit packets to each other through the Wi-Fi transmission channel. In this embodiment of this application, in a downlink direction of transmitting packets from the AP device to the STA device, the packets may be placed in FIFO queues with different priorities on the AP side for scheduling processing.

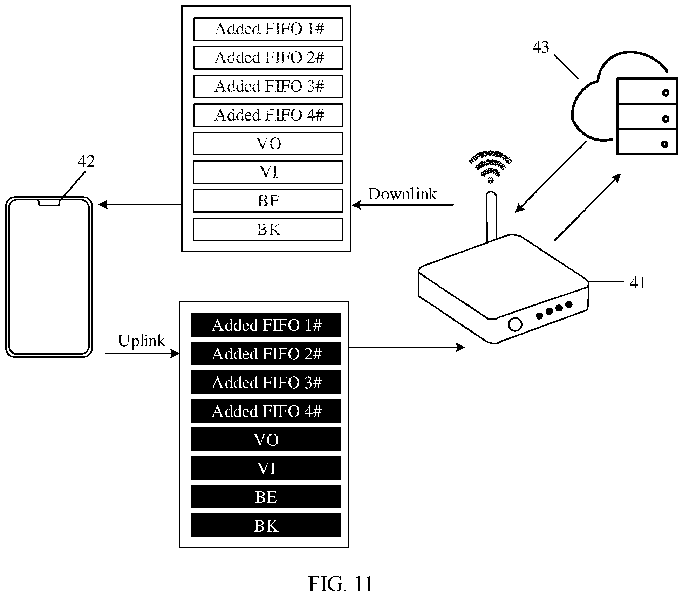

For example, with reference to FIG. 11, in a downlink direction in which an AP device 41 forwards packets to a terminal device 42, if the AP device 41 obtains a to-be-forwarded packet, the AP device may identify a service type of the to-be-forwarded packet, determine a corresponding FIFO queue based on the service type of the to-be-forwarded packet, and add the to-be-forwarded packet to the corresponding FIFO queue. In this way, packets of different service types are scheduled to FIFO queues with different priorities based on features and latency requirements of different services. A packet of specific data (for example, data that requires a low latency) may be scheduled to an added FIFO queue (for example, an added FIFO 1# queue, an added FIFO 2# queue, an added FIFO 3# queue, and/or an added FIFO 4# queue) for preferential transmission, to reduce a transmission latency of the packet. Further, the AP device 41 may sequentially send the packets in the FIFO queues to the terminal device 42 in descending order of queue priority.

That is, the AP device may forward packets received from the STA device to a network server, place packets received from the network server in the FIFO queues with different priorities for scheduling processing, and forward the packets to the STA device.

### Embodiment 3

In Embodiment 3, this application provides a terminal device that supports a Wi-Fi protocol, also referred to as a STA device. The terminal device includes the Wi-Fi chip in Embodiment 1. The terminal device may establish a wireless connection to an AP device through the Wi-Fi protocol, that is, establish a Wi-Fi transmission channel, so that the terminal device and the AP device can transmit packets to each other through the Wi-Fi transmission channel. In this embodiment of this application, in an uplink direction of transmitting packets from the STA device to the AP device, the packets may be placed in FIFO queues with different priorities on the STA side for scheduling processing.

For example, still with reference to FIG. 11, in an uplink direction in which the terminal device 42 sends packets of various service types to the AP device 41, if the terminal device 42 obtains a to-be-forwarded packet, the terminal device 42 may identify a service type of the to-be-forwarded packet, determine a corresponding FIFO queue based on the service type of the to-be-forwarded packet, and schedule the to-be-forwarded packet to the corresponding FIFO queue. In this way, packets of different service types are scheduled to FIFO queues with different priorities based on features and latency requirements of different services. A packet of specific data (for example, data that requires a low latency) may be scheduled to an added FIFO queue (for example, an added FIFO 1# queue, an added FIFO 2# queue, an added FIFO 3# queue, and/or an added FIFO 4# queue) for preferential transmission, to reduce a transmission latency of the packet. Further, the terminal device 42 may sequentially send the packets in the FIFO queues to the AP device 41 in descending order of queue priority.

Optionally, the solution in this embodiment of this application may be further applied to packet transmission in a Wi-Fi Direct scenario. Specifically, a STA device 1 may directly establish a wireless connection to a STA device 2 through the Wi-Fi protocol. That is, a Wi-Fi Direct channel is established between the two STA devices. In this way, both the STA device 1 and the STA device 2 can transmit packets to each other through the Wi-Fi Direct channel. In a process of transmitting packets between the two STA devices, the packets may be placed in FIFO queues with different priorities on any STA side for scheduling processing.

### Embodiment 4

In Embodiment 4, this application provides a queue scheduling method based on a wireless local area network. The method may be implemented through the Wi-Fi chip in Embodiment 1.

In some embodiments, the method may be applied to the AP device in Embodiment 2, and the AP device includes the Wi-Fi chip in Embodiment 1. In some other embodiments, the method may be applied to the terminal device in Embodiment 3, and the terminal device includes the Wi-Fi chip in Embodiment 1. In still some other embodiments, the method may be applied not only to the AP device in Embodiment 2, but also to the terminal device in Embodiment 3.

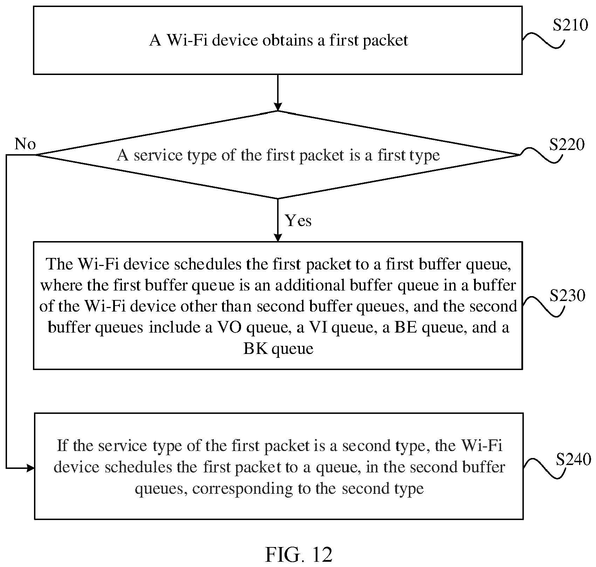

FIG. 12 is a schematic flowchart of a queue scheduling method based on a wireless local area network according to an embodiment of this application. The queue scheduling method is implemented through the FIFO queues (including the four standard queues and the N added private hardware queues) shown in FIG. 8. With reference to FIG. 12, the method 200 includes the following steps S210 to S240.

S210: A Wi-Fi device obtains a first packet.

The Wi-Fi device may be an AP device or a STA device (namely, a terminal device that supports a Wi-Fi protocol). This may be specifically determined based on an actual use requirement and is not limited in this embodiment of this application.

For example, a user performs an input operation on the Wi-Fi device to trigger startup of a game application. That is, a currently processed service is a game service. Correspondingly, the Wi-Fi device may encapsulate related data of the game service in response to the input operation performed by the user on the Wi-Fi device, to obtain a game packet (namely, the first packet).

S220: The Wi-Fi device determines whether a service type of the first packet is a first type.

For example, as described above, the Wi-Fi device may identify the service type of the first packet based on quintuple information of the first packet. Further, the Wi-Fi device may compare the service type of the first packet with the preset first type to determine whether the service type of the first packet is the preset service type. If the preset first type includes the service type of the first packet or the preset first type and the service type of the first packet have same information, it is determined that the service type of the first packet is the first type.

The preset first type may be specifically set by a system or the user. For example, the system sets the preset first type to the game service. For another example, the user may set the preset first type to an electronic red envelope service.

If the service type of the first packet is the first type, S230 is performed. If the service type of the first packet is not the first type, S240 is performed.

S230: The Wi-Fi device schedules the first packet to a first buffer queue. The first buffer queue is an additional buffer queue in a buffer of the Wi-Fi device other than second buffer queues. The second buffer queues include a VO queue, a VI queue, a BE queue, and a BK queue.

There is a mapping relationship or a correspondence between the first type and the first buffer queue. This may be set by the system or the user. For example, the user sets a mapping relationship between the electronic red envelope service (first type) and the first buffer queue.

S240: If the service type of the first packet is a second type, the Wi-Fi device schedules the first packet to a queue, in the second buffer queues, corresponding to the second type.

The second type may be any one of several service types currently planned by an operator. For example, the second type may be a voice service, which corresponds to the VO queue; a video service, which corresponds to the VI queue; an internet access service, which corresponds to the BE queue; or a background service, which corresponds to the BK queue.

Optionally, priorities of the first buffer queue and the second buffer queues may be set based on an actual use requirement. This is not limited in this embodiment of this application. For example, the priority of the first buffer queue is higher than the priorities of the second buffer queues.

Further, packets in the first buffer queue and the second buffer queues may be sequentially output in order of queue priority.

In this embodiment of this application, packets of different service types are scheduled to FIFO queues with different priorities based on features and latency requirements of different services. A packet of specific data (for example, data that requires a low latency) may be scheduled to the added FIFO queue for preferential transmission, to reduce a transmission latency of the packet. In addition, an air-interface transmission latency of the packet may be reduced by setting different quantities of air interface retransmissions, reducing a transmission rate, setting EDCA parameters, setting a packet aggregation degree, and/or setting ATF to specify a traffic percentage.

In actual implementation, in a downlink direction from an AP device to a STA device, a priority may be increased through a private FIFO queue of an AP router, to reduce a downlink packet transmission latency. In addition, in an uplink direction from the STA device to the AP device, a priority may be increased through a private FIFO queue of a mobile phone, to reduce an uplink packet transmission latency. In this way, bidirectional priority increase can be implemented between the AP device and the STA device. A probability that a FIFO queue with a high priority successfully contends for a channel is higher than a probability that a FIFO queue with a low priority successfully contends for the channel. Therefore, packets (packets that need to be preferentially processed or latency-sensitive packets) of some specific services are scheduled to the added private FIFO queue with the high priority for preferential sending.

At present, in different interference scenarios of a Wi-Fi service in which a signal strength is low, there is a transmission latency of 0 milliseconds (ms) to 2000 ms at a Wi-Fi air interface. In this embodiment of this application, hardware and software are optimized to preferentially process high-priority packets such as instant messaging packets and game packets, reduce a packet latency, and control an estimated latency to be 0 ms to 250 ms.

For example, in a home interference scenario, if the game packets are placed in the VO queue, an average air-interface packet transmission latency reaches approximately 87.49 ms. A percentage of packets whose latency exceeds 100 ms is approximately 15.5%, and a percentage of packets whose latency exceeds 200 ms is approximately 0.82%. If the game packets are placed in a FIFO 1# queue, the average latency reaches approximately 72.98 ms. The percentage of the packets whose latency exceeds 100 ms is approximately 2.78%, and the percentage of the packets whose latency exceeds 200 ms is approximately 0%.

In conclusion, in this embodiment of this application, priority queue planning of the operator is not modified. An improvement is that one or more private FIFO queues are added to the existing four standard queues. When packets are transmitted between an AP device and a STA device, packets of different services may be scheduled to FIFO queues with different priorities based on features and latency requirements of different services, and a packet of specific data (for example, data that requires a low latency) may be scheduled to the added FIFO queue for preferential transmission, to reduce a transmission latency of the packet. In comparison with the related art in which prioritization of a Wi-Fi device is not fine enough and only EDCA parameters are factored into transmission latencies of different priorities, in this embodiment of this application, fine prioritization is performed on the Wi-Fi device, features such as a service type (for example, game, payment, and projection) and traffic are further subdivided, and the EDCA parameters and other factors that affect the latency are considered, to reduce a transmission latency of a high-priority packet. In the solution of this application, services having different QoS requirements contend for a channel with different priorities. This provides a specific assurance for services having higher QoS requirements.

It should also be noted that in this embodiment of this application, "greater than" may be replaced by "greater than or equal to", and "less than or equal to" may be replaced by "less than"; or "greater than or equal to" may be replaced by "greater than", and "less than" may be replaced by "less than or equal to".

Embodiments described in this specification may be independent solutions, or may be combined based on internal logic. All these solutions fall within the protection scope of this application.

It may be understood that the method and operations implemented by the Wi-Fi device in the foregoing method embodiment may be alternatively implemented by a component (for example, a chip or a circuit) that can be used in the Wi-Fi device.

The foregoing describes the method embodiment provided in this application, and the following describes apparatus embodiments provided in this application. It should be understood that descriptions of apparatus embodiments correspond to the descriptions of the method embodiment. Therefore, for content that is not described in detail, refer to the foregoing method embodiment. For brevity, details are not described herein again.

The foregoing mainly describes the solutions provided in embodiments of this application from a perspective of method steps. It may be understood that to implement the foregoing functions, the Wi-Fi device that implements the method includes a corresponding hardware structure and/or software module for performing each function. A person skilled in the art should be able to be aware that, in combination with the examples described in embodiments disclosed in this specification, units and algorithm steps can be implemented by hardware or a combination of hardware and computer hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the protection scope of this application.

In embodiments of this application, functional modules of the Wi-Fi device may be obtained through division based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in embodiments of this application, division into the modules is an example, and is merely logical function division. In actual implementation, another division manner may be used. An example in which each functional module is obtained through division based on each corresponding function is used below for description.

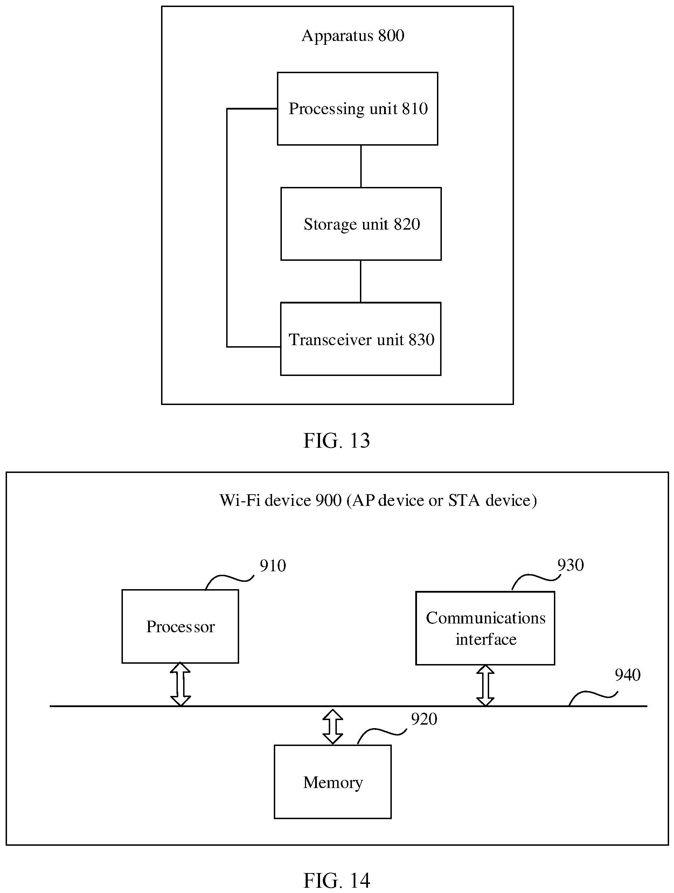

FIG. 13 is a schematic block diagram of a queue scheduling apparatus 800 according to an embodiment of this application. The apparatus 800 may be configured to perform actions performed by the Wi-Fi device in the foregoing method embodiment. The apparatus 800 includes a processing unit 810 and a storage unit 820. The storage unit 820 includes M FIFO queues. The M FIFO queues include first FIFO queues and a second FIFO queue. The first FIFO queues include a VO queue, a VI queue, a BE queue, and a BK queue.

The processing unit 810 is configured to schedule a to-be-transmitted packet to a FIFO queue, in the M FIFO queues, corresponding to a service type of the to-be-transmitted packet.

The storage unit 820 is configured to sequentially output, in descending order of queue priority, packets buffered in the M FIFO queues.

A packet buffered in the second FIFO queue is a packet of a preset service type. A priority of the second FIFO queue is higher than a priority of each of the first FIFO queues.

In some implementations, when there are a plurality of second FIFO queues, at least one of the second FIFO queues has a priority higher than the priority of each of the first FIFO queues. The priorities of the BK queue, the BE queue, the VI queue, and the VO queue are in ascending order.

In some implementations, the processing unit 810 is further configured to identify the service type of the to-be-transmitted packet; and determine, based on a preset correspondence, the FIFO queue corresponding to the service type of the to-be-transmitted packet. The preset correspondence is a correspondence between the service type of the to-be-transmitted packet and one of the M FIFO queues.

In some implementations, the processing unit 810 is specifically configured to obtain quintuple information of the to-be-transmitted packet; and identify the service type of the to-be-transmitted packet based on the quintuple information of the to-be-transmitted packet. The quintuple information includes a source MAC address, a destination MAC address, a source IP address, a destination IP address, and a port number.

In some implementations, the apparatus 800 further includes a transceiver unit 830. The transceiver unit 830 is configured to: after the storage unit 820 sequentially outputs, in descending order of the queue priorities, the packets buffered in the M FIFO queues, transmit, to a target device through a Wi-Fi channel, the packets sequentially output by the M FIFO queues.

In some implementations, if the apparatus 800 is an AP device, the transceiver unit 830 is specifically configured to transmit, to a STA device through the Wi-Fi channel, the packets sequentially output by the M FIFO queues in the AP device. Alternatively, if the apparatus 800 is a first STA device, the transceiver unit 830 is specifically configured to transmit, to an AP device or a second STA device through the Wi-Fi channel, the packets sequentially output by the M FIFO queues in the first STA device.

In some implementations, if the apparatus 800 is the AP device, the processing unit 810 is further configured to receive the quintuple information of the to-be-transmitted packet sent by the STA device, identify the service type of the to-be-transmitted packet based on the quintuple information of the to-be-transmitted packet, and determine, based on the preset correspondence, the FIFO queue corresponding to the service type of the to-be-transmitted packet. The preset correspondence is the correspondence between the service type of the to-be-transmitted packet and one of the M FIFO queues.

In some implementations, enhanced distributed channel access EDCA parameters corresponding to the second FIFO queue include an arbitration interframe spacing number AIFSN, a transmission opportunity limit TXOPL, an exponent form of a minimum contention window ECWₘᵢₙ, and an exponent form of a maximum contention window ECWₘₐₓ. The AIFSN is set to be less than or equal to a preset spacing number threshold; and/or the TXOPL is set to be less than or equal to a preset transmission opportunity threshold; and/or a value of ECWₘₘ is set to be less than or equal to a preset minimum window threshold; and/or a value of ECWₘₘ is set to be less than or equal to a preset maximum window threshold.

In some implementations, a maximum packet sending rate corresponding to the second FIFO queue is set to be less than or equal to a preset rate threshold.

In some implementations, a Wi-Fi air interface bandwidth occupancy rate corresponding to the second FIFO queue is set to be greater than or equal to a preset bandwidth occupancy rate threshold.

In some implementations, a Wi-Fi air interface packet aggregation degree corresponding to the second FIFO queue is set to be less than or equal to a preset aggregation degree threshold.

The apparatus 800 in this embodiment of this application may correspondingly perform the method described in embodiments of this application. In addition, the foregoing and other operations and/or functions of the units in the apparatus 800 are used to implement corresponding procedures of the method. For brevity, details are not described herein again.

FIG. 14 is a schematic diagram of a structure of a Wi-Fi device 900 according to an embodiment of this application. It should be understood that the Wi-Fi device 900 may correspond to the AP device or the STA device in the foregoing embodiments of this application. The Wi-Fi device 900 includes a processor 910, a memory 920, a communications interface 930, and a bus 940.

The processor 910 may be connected to the memory 920. The memory 920 may be configured to store program code and data. Therefore, the memory 920 may be a storage unit in the processor 910, an external storage unit independent of the processor 910, or a component including the storage unit in the processor 910 and the external storage unit independent of the processor 910.

Optionally, the Wi-Fi device 900 may further include the bus 940. The memory 920 and the communications interface 930 may be connected to the processor 910 through the bus 940. The bus 940 may be a peripheral component interconnect (peripheral component interconnect, PCI) bus, an extended industry standard architecture (extended industry standard architecture, EISA) bus, or the like. The bus 940 may be categorized into an address bus, a data bus, a control bus, or the like. For ease of indication, the bus is indicated by using only one line in FIG. 14. However, it does not indicate that there is only one bus or only one type of bus.

It should be understood that in this embodiment of this application, the processor 910 may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like. Alternatively, the processor 910 uses one or more integrated circuits, and is configured to execute a related program, to implement the technical solutions provided in embodiments of this application.

The memory 920 may include a read-only memory and a random access memory, and provides instructions and data to the processor 910. A part of the processor 910 may further include a non-volatile random access memory. For example, the processor 910 may further store device type information.

When the Wi-Fi device 900 runs, the processor 910 executes computer-executable instructions in the memory 920 to perform the steps of the foregoing queue scheduling method.

It should be understood that the Wi-Fi device 900 provided in this embodiment of this application may correspond to the apparatus 800 in embodiments of this application, the processor 910 in the Wi-Fi device 900 may correspond to the processing unit 810 in the apparatus 800 in FIG. 13, and the memory 920 in the Wi-Fi device 900 may correspond to the storage unit 820 in the apparatus 800 in FIG. 13. The foregoing and other operations and/or functions of the units in the apparatus 800 are used to implement corresponding procedures of the foregoing method. For brevity, details are not described herein again.

In this embodiment of this application, the Wi-Fi device includes a hardware layer, an operating system layer running on the hardware layer, and an application layer running on the operating system layer. The hardware layer may include hardware such as a central processing unit (central processing unit, CPU), a memory management unit (memory management unit, MMU), and a memory (also referred to as a primary memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

Optionally, in some embodiments, embodiments of this application further provide a computer-readable medium. The computer-readable medium stores program code. When the computer program code is run on a computer, the computer is enabled to perform the method in the foregoing aspect.

Optionally, in some embodiments, embodiments of this application further provide a computer program product. The computer program product includes computer program code. When the computer program code is run on a computer, the computer is enabled to perform the method in the foregoing aspect.

A specific structure of an execution body of the method provided in embodiments of this application is not specifically limited in embodiments of this application, provided that a program that records code for the method provided in embodiments of this application can be run to perform communication according to the method provided in embodiments of this application. For example, the method provided in embodiments of this application may be performed by a terminal device, or may be performed by a functional module that can invoke a program and execute the program in the terminal device.

Aspects or features of this application may be implemented as a method, an apparatus, or a product that uses standard programming and/or engineering technologies. The term "product" used in this specification may cover a computer program that can be accessed from any computer-readable component, carrier, or medium. For example, the computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive).

Various storage media described in this specification may indicate one or more devices and/or other machine-readable media that are configured to store information. The term "machine-readable media" may include but is not limited to a radio channel and various other media that can store, include, and/or carry instructions and/or data.

It should be understood that the processor in embodiments of this application may be a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should further be noted that the memory described in this specification aims to include but is not limited to these memories and any memory of another proper type.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

A person skilled in the art can clearly understand that for convenience and brevity of description, reference may be made to corresponding processes in the foregoing method embodiment for specific working processes of the foregoing system, apparatus, and units. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a computer software product. The computer software product is stored in a storage medium, and includes several instructions for instructing a computer device (which may be a personal computer, a server, a network device, or the like) to perform all or some of the steps of the method described in embodiments of this application. The foregoing storage medium may include but is not limited to any medium that can store program code, such as a USB flash drive, a removable hard disk, a ROM, a RAM, a magnetic disk, or an optical disc.

Unless otherwise defined, all technical and scientific terms used in this specification have same meanings as those usually understood by a person skilled in the art of this application. The terms used in the specification of this application are merely for the purpose of describing specific embodiments, and are not intended to limit this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A Wi-Fi chip, wherein the Wi-Fi chip comprises a processor that supports a Wi-Fi protocol and M first in first out FIFO queues connected to the processor, the M FIFO queues comprise first FIFO queues and a second FIFO queue, and the first FIFO queues comprise a voice VO flow queue, a video VI flow queue, a best effort BE flow queue, and a background BK flow queue;
the processor is configured to schedule a to-be-transmitted packet to a FIFO queue, in the M FIFO queues, corresponding to a service type of the to-be-transmitted packet;
the M FIFO queues are used to buffer packets scheduled by the processor and sequentially output the buffered packets in descending order of queue priority; and
a priority of the second FIFO queue is higher than a priority of each of the first FIFO queues, and a packet buffered in the second FIFO queue is a packet of a preset service type.

2. The Wi-Fi chip according to claim 1, wherein the processor is further configured to:
identify the service type of the to-be-transmitted packet based on quintuple information of the to-be-transmitted packet; and
determine, based on a preset correspondence, the FIFO queue corresponding to the service type of the to-be-transmitted packet; wherein
the preset correspondence is a correspondence between the service type of the to-be-transmitted packet and one of the M FIFO queues, and the quintuple information comprises a source physical MAC address, a destination MAC address, a source IP address, a destination IP address, and a port number.

3. The Wi-Fi chip according to claim 1 or 2, wherein the Wi-Fi chip further comprises a transceiver connected to the M FIFO queues; and
the transceiver is configured to transmit, to a target device through a Wi-Fi channel, the packets sequentially output by the M FIFO queues.

4. The Wi-Fi chip according to claim 3, wherein
the Wi-Fi chip is disposed in a wireless access point AP device, and the target device is a station STA device; or
the Wi-Fi chip is disposed in a first STA device, and the target device is an AP device or a second STA device.

5. The Wi-Fi chip according to claim 3 or 4, wherein
the transceiver is further configured to transmit the quintuple information of the to-be-transmitted packet to the target device.

6. The Wi-Fi chip according to any one of claims 1 to 5, wherein enhanced distributed channel access EDCA parameters corresponding to the second FIFO queue comprise an arbitration interframe spacing number AIFSN, a transmission opportunity limit TXOPL, an exponent form of a minimum contention window ECWₘᵢₙ, and an exponent form of a maximum contention window ECWₘₐₓ; and
the AIFSN is set to be less than or equal to a preset spacing number threshold; and/or the TXOPL is set to be less than or equal to a preset transmission opportunity threshold; and/or a value of ECWₘₘ is set to be less than or equal to a preset minimum window threshold; and/or a value of ECWₘₐₓ is set to be less than or equal to a preset maximum window threshold.

7. The Wi-Fi chip according to any one of claims 1 to 6, wherein a Wi-Fi air interface bandwidth occupancy rate corresponding to the second FIFO queue is greater than or equal to a preset bandwidth occupancy rate threshold.

8. The Wi-Fi chip according to any one of claims 1 to 7, wherein a maximum packet sending rate corresponding to the second FIFO queue is set to be less than or equal to a preset rate threshold.

9. The Wi-Fi chip according to any one of claims 1 to 8, wherein a Wi-Fi air interface packet aggregation degree corresponding to the second FIFO queue is set to be less than or equal to a preset aggregation degree threshold.

10. The Wi-Fi chip according to any one of claims 1 to 9, wherein when there are a plurality of second FIFO queues, at least one of the plurality of second FIFO queues has a priority higher than the priority of each of the first FIFO queues, and the priorities of the BK queue, the BE queue, the VI queue, and the VO queue in the first FIFO queues are in ascending order.

11. A Wi-Fi device, used on a station STA side, wherein the Wi-Fi device comprises the Wi-Fi chip according to any one of claims 1 to 10; and
the Wi-Fi device is configured to:
generate or invoke, in response to an input operation performed by a user on a first application loaded in the Wi-Fi device, a to-be-transmitted packet corresponding to the first application; and
send the to-be-transmitted packet to a wireless access point AP device or another Wi-Fi device through the Wi-Fi chip.

12. A Wi-Fi device, used on a wireless access point AP side, wherein the Wi-Fi device comprises the Wi-Fi chip according to any one of claims 1 to 10; and
the Wi-Fi device is configured to:
forward, to a second station STA device through the Wi-Fi chip, a packet received from a first STA device; or
forward, to a network server through the Wi-Fi chip, a packet received from a first STA device; and/or forward, to the first STA device through the Wi-Fi chip, a packet received from the network server.

13. A queue scheduling method, wherein the method comprises:
scheduling a to-be-transmitted packet to a FIFO queue, in M FIFO queues, corresponding to a service type of the to-be-transmitted packet; and
sequentially outputting, in descending order of queue priority, packets buffered in the M FIFO queues; wherein
the M FIFO queues comprise first FIFO queues and a second FIFO queue, the first FIFO queues comprise a voice VO flow queue, a video VI flow queue, a best effort BE flow queue, and a background BK flow queue, a packet buffered in the second FIFO queue is a packet of a preset service type, and a priority of the second FIFO queue is higher than a priority of each of the first FIFO queues.

14. The method according to claim 13, wherein before the scheduling a to-be-transmitted packet to a FIFO queue, in M FIFO queues, corresponding to a service type of the to-be-transmitted packet, the method further comprises:
identifying the service type of the to-be-transmitted packet; and
determining, based on a preset correspondence, the FIFO queue corresponding to the service type of the to-be-transmitted packet; wherein
the preset correspondence is a correspondence between the service type of the to-be-transmitted packet and one of the M FIFO queues.

15. The method according to claim 14, wherein the identifying the service type of the to-be-transmitted packet comprises:
obtaining quintuple information of the to-be-transmitted packet; and
identifying the service type of the to-be-transmitted packet based on the quintuple information of the to-be-transmitted packet; wherein
the quintuple information comprises a source physical MAC address, a destination MAC address, a source IP address, a destination IP address, and a port number.

16. The method according to any one of claims 13 to 15, wherein after the sequentially outputting, in descending order of queue priority, packets buffered in the M FIFO queues, the method further comprises:
transmitting, to a target device through a Wi-Fi channel, the packets sequentially output by the M FIFO queues.

17. The method according to claim 16, wherein the transmitting, to a target device through a Wi-Fi channel, the packets sequentially output by the M FIFO queues comprises:
transmitting, by a wireless access point AP device to a station STA device through the Wi-Fi channel, the packets sequentially output by the M FIFO queues; or
transmitting, by a first station STA device to an AP device or a second STA device through the Wi-Fi channel, the packets sequentially output by the M FIFO queues.

18. The method according to any one of claims 13 to 17, wherein the method further comprises:
receiving, by the AP device, the quintuple information of the to-be-transmitted packet sent by the STA device, identifying the service type of the to-be-transmitted packet based on the quintuple information of the to-be-transmitted packet, and determining, based on the preset correspondence, the FIFO queue corresponding to the service type of the to-be-transmitted packet; wherein
the preset correspondence is the correspondence between the service type of the to-be-transmitted packet and one of the M FIFO queues.

19. The method according to any one of claims 13 to 18, wherein enhanced distributed channel access EDCA parameters corresponding to the second FIFO queue comprise an arbitration interframe spacing number AIFSN, a transmission opportunity limit TXOPL, an exponent form of a minimum contention window ECWₘᵢₙ, and an exponent form of a maximum contention window ECWₘₐₓ; and
the AIFSN is set to be less than or equal to a preset spacing number threshold; and/or the TXOPL is set to be less than or equal to a preset transmission opportunity threshold; and/or a value of ECWₘₘ is set to be less than or equal to a preset minimum window threshold; and/or a value of ECWₘₐₓ is set to be less than or equal to a preset maximum window threshold.

20. The method according to any one of claims 13 to 19, wherein a maximum packet sending rate corresponding to the second FIFO queue is set to be less than or equal to a preset rate threshold.

21. The method according to any one of claims 13 to 20, wherein a Wi-Fi air interface bandwidth occupancy rate corresponding to the second FIFO queue is set to be greater than or equal to a preset bandwidth occupancy rate threshold.

22. The method according to any one of claims 13 to 21, wherein a Wi-Fi air interface packet aggregation degree corresponding to the second FIFO queue is set to be less than or equal to a preset aggregation degree threshold.

23. The method according to any one of claims 13 to 22, wherein when there are a plurality of second FIFO queues, at least one of the second FIFO queues has a priority higher than the priority of each of the first FIFO queues, and the priorities of the BK queue, the BE queue, the VI queue, and the VO queue are in ascending order.

24. A Wi-Fi device, comprising a processor, wherein the processor is coupled to a memory, and the processor is configured to execute a computer program or instructions stored in the memory, to enable the Wi-Fi device to implement the method according to any one of claims 13 to 23.

25. A computer-readable storage medium, wherein the computer-readable storage medium stores a computer program, and when the computer program is run on a Wi-Fi device, the Wi-Fi device is enabled to perform the method according to any one of claims 13 to 23.

26. A computer program product, wherein the computer program product comprises a computer program, and when the computer program is executed by a computer, the computer is enabled to implement the method according to any one of claims 13 to 23.
